# FASCICULE DE BREVET EUROPEEN

(11) **EP 2 907 421 B1**
(45) Date de publication et mention de la délivrance du brevet: **10.05.2017**
(21) Numéro de dépôt: 15154279.2
(22) Date de dépôt: 09.02.2015
(51) Int. Cl.: A47F 9/04, G07G 1/00

(54) **Dispositif d'encaissement d'articles comportant un module de communication sans fil**
Vorrichtung zum Kassieren für Einkäufe von Artikeln, die ein drahtloses Kommunikationsmodul umfasst
Device for checking items comprising a wireless communication module

(30) Priorité: 13.02.2014 FR 1451122
(43) Date de publication de la demande: 19.08.2015
(73) Titulaire: HMY Group, 89470 Moneteau (FR)
(72) Inventeur: Hervieux, Philippe, F-56150 Baud (FR); Berthaud, Philippe, 89700 Tonnerre (FR)
(74) Mandataire: Santarelli

(56) Documents cités:
- US-A1- 2013 085 878
- US-A1- 2013 229 352
- US-B1- 6 502 749

## Description

La présente invention concerne le domaine des dispositifs d'encaissement d'articles destinés à être installés dans un magasin, également appelés caisses de sortie de magasin ou plus simplement « caisse ». Les dispositifs d'encaissement comportent généralement un ensemble mobilier adapté à recevoir des moyens d'encaissement permettant l'enregistrement des achats et la réalisation des opérations de paiement liées aux achats.

L'ensemble mobilier tend à offrir une ergonomie adaptée à ces opérations, tant pour l'acheteur passant en caisse que pour l'opérateur de caisse en charge desdites opérations. L'ensemble mobilier des dispositifs d'encaissement comporte généralement, en amont des moyens d'encaissement, des moyens de réception des articles. Les moyens de réception des articles permettent de déposer les articles avant leur achat, c'est-à-dire avant leur enregistrement par un opérateur en vue de leur paiement. Les moyens de réception comportent généralement un tapis roulant permettant d'acheminer les articles qui y sont déposés à proximité des moyens d'encaissement. Un opérateur enregistre les articles, typiquement en scannant un code-barres apposé sur les articles, puis les dépose dans une zone de stockage de l'ensemble mobilier, en aval des moyens d'encaissement. Le consommateur peut récupérer les articles qu'il achète dans la zone de stockage.

Un exemple de système ou dispositif d'encaissement est présenté dans le document FR2900554, dans une variante particulière comportant deux compartiments de stockage des articles et des moyens pour orienter les articles vers l'un ou l'autre des compartiments.

En plus de la réception, de l'enregistrement et du stockage des articles, de nombreuses autres fonctions peuvent être réalisées par le dispositif d'encaissement, selon le modèle considéré. Ainsi, le dispositif d'encaissement peut comporter une signalétique lumineuse tel un lanterneau, dont la couleur indique l'état « ouvert » ou « fermé » de la caisse. Le dispositif peut comporter une cellule de détection des articles, permettant la mise en marche et l'arrêt automatique d'un tapis roulant. Le dispositif d'encaissement peut aussi comporter un portillon, à ouverture et fermeture manuelle ou motorisée, portillon pour lequel des moyens de détection de l'état peuvent être prévus. Il peut également présenter plusieurs tapis roulant, un dispositif d'ensachage automatique des articles, etc.

Ainsi, les dispositifs électriques ou électroniques associés au dispositif d'encaissement sont de plus en plus nombreux. Le pilotage de ces dispositifs est de plus en plus complexe tant pour ce qui concerne l'architecture électrique et électronique à mettre en oeuvre que pour ce qui concerne les interfaces de commande associées.

Cela entraîne la mise en place de systèmes complexes, peu évolutifs, et difficiles à paramétrer individuellement selon le magasin dans lequel le dispositif d'encaissement est installé.

Le document US2013229352 divulgue une interface de contrôle à écran tactile, pouvant notamment être employé au comptoir d'un magasin.

La présente invention a pour but de proposer un dispositif d'encaissement permettant de résoudre au moins l'un des inconvénients précités.

Ainsi, l'invention porte sur dispositif d'encaissement d'articles destiné à être installé en sortie d'un magasin, comportant :
- un ensemble mobilier doté de systèmes électriques comportant au moins :
- un dispositif d'éclairage, ou
- des moyens de réception comportant un tapis roulant,
- des moyens d'encaissement,
- un dispositif de commande desdits systèmes électriques dont l'ensemble mobilier est doté comportant une carte électronique.
Le dispositif de commande comporte un module de communication sans fil configuré pour recevoir des instructions de contrôle desdits systèmes électriques.

La communication sans fil à destination des dispositifs de commande permet la constitution de dispositifs d'encaissement d'architecture simplifiée, et pouvant offrir de nouvelles prestations, comme par exemple la commande des systèmes électriques par un dispositif externe au dispositif d'encaissement, de nouvelles fonctions de maintenance, etc.

De préférence, le module de communication est relié à un port de communication de la carte électronique.

Selon un mode de réalisation, la carte électronique comporte le module de communication.

Le module de communication peut être configuré pour communiquer par une liaison de type Bluetooth, ou par une liaison de type Wi-Fi. Ces types de protocoles sont particulièrement bien adaptés à des communications à courtes ou moyennes distances, et permettent des communications sécurisées.

L'invention porte également sur un ensemble comportant un dispositif d'encaissement tel que précédemment défini et une interface de commande sans fil, ladite interface de commande comportant des moyens de communication sans fil adaptés à communiquer avec le module de communication du dispositif d'encaissement.

Dans une variante, l'ensemble comporte en outre une interface de commande filaire liée à la carte électronique par une liaison filaire. Selon diverses variantes de l'invention, l'interface filaire peut être employée en complément ou en substitution de l'interface sans fil. L'ensemble peut alors comporter en outre des moyens de commutation configurés pour commuter entre une commande des systèmes électriques par l'interface de commande sans fil et une commande des systèmes électriques par l'interface de commande filaire.

L'interface de commande sans fil peut avantageusement comporter un écran tactile.

L'interface de commande sans fil peut être par exemple un Smartphone, une tablette tactile, ou un ordinateur à écran tactile.

L'ensemble mobilier du dispositif d'encaissement peut comporter un support conformé pour recevoir l'interface de commande sans fil.

L'interface de commande sans fil peut avantageusement mettre en oeuvre une interface graphique de pilotage de fonctions du dispositif d'encaissement. De préférence, l'interface graphique comporte un menu contextuel. La mise en oeuvre d'une interface à écran tactile et menu contextuel permet le pilotage de fonctions nombreuses et/ou complexes via une interface simple et intuitive.

L'interface graphique peut être configurée pour le pilotage d'une ou plusieurs fonctions du dispositif d'encaissement parmi : la mise en marche et l'arrêt du dispositif d'encaissement, le pilotage d'un tapis roulant, l'arrêt d'urgence, le pilotage de l'allumage et/ou du changement de couleur d'une signalétique lumineuse d'état du dispositif d'encaissement, le pilotage de l'allumage d'un dispositif d'éclairage de tapis roulant.

L'interface graphique peut être configurée pour le pilotage d'une ou plusieurs fonctions de maintenance du dispositif d'encaissement parmi : un diagnostic de bon fonctionnement du dispositif d'encaissement, l'indication de statistiques d'utilisation du dispositif d'encaissement, l'indication d'un temps de fonctionnement du dispositif d'encaissement, le lancement d'un service de maintenance à distance.

L'interface graphique peut être configurée pour le pilotage d'une ou plusieurs fonctions de paramétrage du dispositif d'encaissement parmi : le réglage de la vitesse d'un tapis roulant du dispositif d'encaissement, le paramétrage de fonctions de détection de présence d'articles, le paramétrage d'une signalétique lumineuse, le paramétrage de l'ouverture et fermeture d'un portillon.

L'interface graphique peut être configurée pour le pilotage d'une ou plusieurs fonctions d'aide à l'usage, par un opérateur de caisse, du dispositif d'encaissement parmi : la fourniture de conseil d'ergonomie, un appel d'urgence, la gestion des temps de pause, la fourniture de conseil de manutention des articles, le lancement d'un programme d'aide à l'usage du dispositif d'encaissement.

D'autres particularités et avantages de l'invention apparaîtront encore dans la description ci-après.

Aux dessins annexés, donnés à titre d'exemples non limitatifs :
- la figure 1 représente selon une vue schématique en trois dimensions un dispositif d'encaissement selon un mode de réalisation de l'invention.
- la figure 2 représente, selon une vue schématique en trois dimensions, un ensemble comportant le dispositif de la figure 1 et une interface de commande.
- la figure 3 représente l'ensemble de la figure 2 selon une autre vue schématique en trois dimensions ;
- la figure 4 représente, selon une vue schématique en trois dimensions, un ensemble conforme à un autre mode de réalisation de l'invention ;
- la figure 5 présente, de manière schématique, une carte électronique d'un système de commande pouvant être mise en oeuvre dans un mode de réalisation de l'invention ;
- la figure 6 présente, sous forme d'un diagramme, un exemple de premier niveau d'une interface graphique pouvant être mise en oeuvre dans un mode de réalisation de l'invention ;
- la figure 7 présente, sous forme d'un diagramme, un exemple de deuxième niveau d'une interface graphique pouvant être mise en oeuvre dans un mode de réalisation de l'invention ;
- la figure 8 présente, sous forme de diagramme, un exemple de menu contextuel pour la commande d'un tapis, pouvant être mis en oeuvre dans un mode de réalisation de l'invention ;
- la figure 9 présente, sous forme de diagramme, un exemple de menu contextuel pour la commande d'éclairages, pouvant être mis en oeuvre dans un mode de réalisation de l'invention.

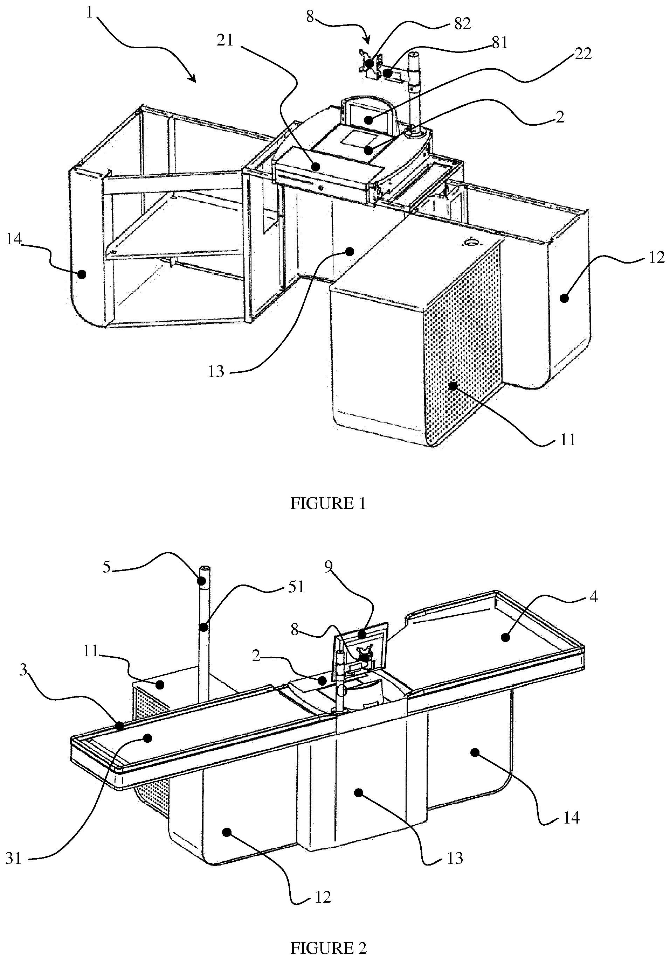

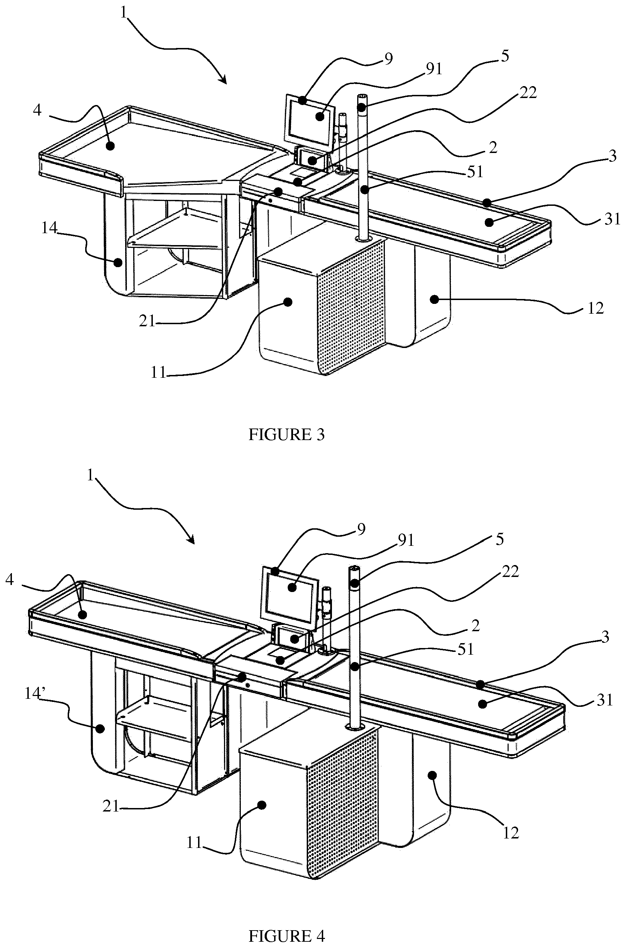

Un dispositif d'encaissement comporte un ensemble mobilier 1 et des moyens d'encaissement 2. L'ensemble mobilier 1 comporte, dans l'exemple présenté en figure 1, une structure de préférence métallique définissant quatre caissons 11, 12, 13, 14. L'ensemble mobilier 1 peut également comporter, tel que représenté notamment sur la figure 2, des moyens de réception 3, comportant typiquement un tapis roulant 31 sur lequel l'acheteur peut déposer des articles avant leur encaissement. Le tapis roulant 31 permet l'acheminement des articles à proximité des moyens d'encaissement 2. L'ensemble mobilier 1 peut en outre comporter des moyens de stockage 4 des articles après leur encaissement. Les moyens de stockage 4 peuvent typiquement avoir la forme d'un bac présentant un fond en pente douce. La forme des moyens de stockage peut être adaptée selon l'application considérée, par exemple un caisson évasée 14' tel que visible à la figure 4 peut être employé.

L'ensemble mobilier 1 peut présenter nombre d'autres accessoires, notamment des éclairages. Le terme « éclairage » doit être compris comme tout dispositif électrique lumineux, visant à éclairer le dispositif d'encaissement ou son environnement, ou constituant une signalétique. On peut citer par exemple un lanterneau 5 destiné à indiquer l'état de disponibilité du dispositif d'encaissement. Le lanterneau peut être installé au sommet d'un mat 51, pour une meilleure visibilité. Typiquement, une lumière verte peut signaler un dispositif d'encaissement « ouvert », c'est-à-dire en fonctionnement et prêt à encaisser les articles d'un acheteur, une lumière rouge peut signaler un dispositif d'encaissement « fermé », c'est-à-dire qui n'est pas en état d'encaisser les articles d'un client, et une lumière orange ou une combinaison de lumière verte et rouge peut indiquer un dispositif d'encaissement étant sur le point de fermer. De nombreuses autres signalétiques lumineuses (code de couleurs, pictogrammes, etc.) sont bien évidemment envisageables.

Les moyens d'encaissement 2 comportent, dans les exemples de modes de réalisation ici représentés, un tiroir-caisse 21 permettant d'y stocker l'argent et certains documents (tickets justificatifs, bons d'achats, etc.). Le tiroir-caisse 21 peut être amovible. Les moyens d'encaissement comportent un ensemble électrique et électronique pouvant comporter un scanner 22 destiné à l'identification d'articles munis d'un code-barres. Les moyens d'encaissement peuvent comporter d'autres périphériques (non représentés), tels qu'une balance pour la pesée de certains articles, ou un terminal de paiement par carte bleue.

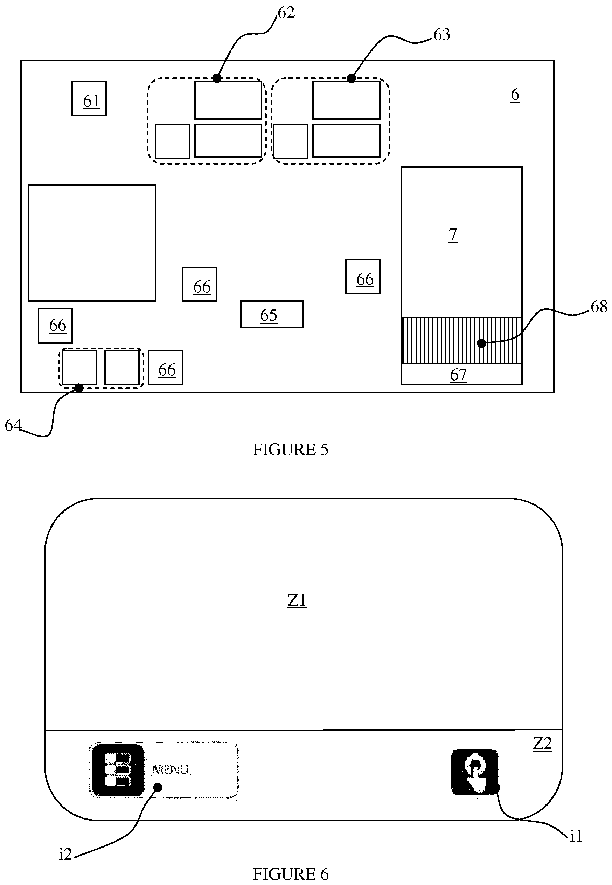

Les différents accessoires électriques liés au mobilier 1, tels que le tapis roulant 31 ou le lanterneau 5 sont commandés par un dispositif de commande comportant une carte électronique 6. Un exemple d'une telle carte électronique 6 est schématiquement représenté à la figure 5. La carte électronique 6 comporte un circuit imprimé, maintenant et reliant électriquement un ensemble de composants électroniques permettant la commande des fonctions électriques du dispositif d'encaissement. La carte électronique 6 comporte en outre un certain nombre de ports, permettant le branchement des dispositifs électriques.

La carte électronique 6 comporte un port d'alimentation électrique 61. Il peut être adapté typiquement au branchement d'une source électrique en 220 volts ou en 24 volts.

Un premier ensemble de ports 62 est destiné à la commande d'un premier moteur électrique de tapis roulant. Un deuxième ensemble de port 63 est destiné à la commande d'un deuxième moteur électrique de tapis roulant. La carte ici représentée comporte un troisième ensemble de ports 64 destinés au branchement d'une ou plusieurs pédales de commande d'avance et de recul du tapis roulant. Un port de cellule 65 est destiné au branchement de la cellule photo-électrique permettant de piloter la mise en marche et l'arrêt automatique du tapis roulant, au fur et à mesure qu'un opérateur de caisse encaisse les articles qui y sont déposés. Des ports optionnels 66 peuvent être prévus pour le branchement de dispositifs optionnels tels qu'une alarme de débranchement d'une sangle formant portillon liée au mobilier du dispositif d'encaissement, un dispositif de portillon motorisé, une télécommande, etc.

Selon l'invention, les dispositifs de commande comportent un module de communication 7, destiné à recevoir des instructions de commande des systèmes électriques commandés par la carte via un lien de communication sans fil.

Dans l'exemple ici représenté, le module de communication 7 est monté sur la carte électronique 6, à laquelle il est électriquement (et fonctionnellement) relié à un port de communication 67 qu'elle comporte, via un bus 68. Dans une autre variante de l'invention non représentée, le module de communication 7 est conformé pour son branchement direct sur la carte électronique 6. Dans encore une autre variante de l'invention non représentée, la carte électronique 6 comporte le module de communication 7. Dans encore une autre variante de l'invention non représentée, le module de communication 7 n'est pas monté sur la carte, il est simplement lié à la carte via le bus 68 relié au port de communication 67, et mécaniquement lié à une autre structure du dispositif d'encaissement que la carte électronique 6.

Il est notable que dans le cas d'une carte électronique doté d'un port de communication 67, une interface de commande à liaison filaire peut être connectée, temporairement ou à demeure, à la place ou en complément de l'interface de commande sans fil. Une telle interface est typiquement un pupitre de commande, comportant des boutons de commande des dispositifs électriques associés à l'ensemble mobilier du dispositif d'encaissement. Lorsque l'ensemble comporte en complément du module sans fil 7 une interface de commande filaire liée à la carte électronique par une liaison filaire, l'ensemble peut avantageusement comporter des moyens de commutation configurés pour commuter entre une commande des systèmes électriques par l'interface de commande sans fil et une commande des systèmes électriques par l'interface de commande filaire.

Le module de communication 7 permet une communication sans fil entre la carte électronique 6 et une interface de commande sans fil, comportant des moyens de communication sans fil. De nombreux protocoles de communication sans fil peuvent être employés. Une liaison de type Bluetooth (marque déposée) est notamment particulièrement bien adaptée à la communication à courte distance entre l'interface de commande sans fil et le module de communication 67. Une liaison de type WiFi (marque déposée) est également adaptée. D'autres protocoles de communication sans fil peuvent bien évidemment être employés.

L'ensemble mobilier 1 du dispositif d'encaissement peut avantageusement comporter un support 8 adapté à la réception et/ou à la fixation d'une interface de commande sans fil 9. Le support peut notamment comporter un bras de support 81, qui peut par exemple être lié en pivot à l'ensemble mobilier 1. Une plaque de support 82 peut servir à la fixation de l'interface de commande sans fil 9. Tout type de support adapté peut être employé, mettant par exemple en oeuvre une fixation par clip, pince, etc. Le support peut être monté sur pivot ou rotule, afin de permettre le réglage en position et/ou en orientation de l'interface de commande sans fil 9.

Un exemple d'interface de commande sans fil 9 est visible aux figures 2, 3 et 4. L'interface de commande sans fil 9 comporte dans l'exemple représenté un écran tactile 91. L'interface de commande sans fil 9 peut être un appareil conçu et dédié exclusivement pour un usage avec un dispositif d'encaissement conforme à l'invention. L'interface de commande sans fil peut également être un appareil non-dédié. Il peut s'agir par exemple d'un ordinateur (par exemple du type « PC »), une tablette tactile, ou encore un terminal mobile de poche (plus couramment désigné par le terme anglophone « smartphone »). L'interface de commande sans fil est alors équipée d'un programme ou d'une application dédiée à la communication avec le module de communication 7. L'interface de commande sans fil doit être configurée pour pouvoir communiquer avec le module de communication 7, c'est-à-dire typiquement être équipée de la connectivité sans fil adaptée, et mettre en oeuvre un protocole de communication adapté.

La communication entre l'interface de commande sans fil 9 et le module de communication 7 du dispositif de commande du dispositif d'encaissement peut comprendre l'envoi de données de l'interface de commande sans fil 9 vers le dispositif de commande via le module de communication 7. Ainsi, des instructions sont envoyées vers le module de communication, et le dispositif de commande entraîne leur exécution par les dispositifs électriques ou électronique concernés. On peut citer par exemple et de manière non exhaustive, les instructions de mise en marche du tapis roulant, éventuellement spécifiant une direction et une vitesse ; les instructions liées à divers éclairages du dispositif d'encaissement et qui entraînent l'allumage, l'extinction, un changement de couleur, d'intensité lumineuse d'un ou plusieurs dispositifs lumineux.

La communication entre l'interface de commande sans fil 9 et le module de communication 7 peut également comprendre l'envoi de données du dispositif de commande via le module de communication vers l'interface sans fil 9. Les informations envoyées à l'interface de commande sans fil 9 peuvent être des informations de confirmation de la bonne réception d'une instruction. Il peut aussi s'agir d'informations de retour sur les fonctions commandées, pouvant par exemple provoquer un changement d'affichage au niveau de l'interface (par exemple, l'allumage d'un lanterneau peut provoquer la modification d'apparence d'une icône au niveau de l'interface). Il peut également s'agir d'informations relatives à l'état des systèmes électriques commandés par le dispositif de commande : temps de fonctionnement, éventuelle indication d'une défaillance, etc.

Le module de communication et/ou l'interface peuvent être adaptés à communiquer avec un système externe. Les éventuelles informations à destination d'un système externe peuvent typiquement être des informations statistiques sur l'usage du dispositif d'encaissement (temps de fonctionnement, temps de travail d'un opérateur, etc.) ou des alertes de défaillance ou de maintenance, à destination d'un système central de gestion des dispositifs d'encaissement, typiquement d'un grand magasin.

Corollairement, il est possible, dans certains modes de réalisation de l'invention, qu'un système externe tel un système central de gestion des dispositifs d'encaissement envoie des données, soit au dispositif d'encaissement via son module de communication 7, soit à un ensemble comportant un dispositif d'encaissement associé à une interface sans fil via cette interface sans fil. Typiquement, il peut s'agir de données visant à modifier un paramètre de fonctionnement du dispositif d'encaissement (vitesse par défaut d'un tapis, reconfiguration d'un paramètre d'affichage de l'interface de commande sans fil ou filaire le cas échéant). Il peut également s'agir d'information de maintenance à destination du dispositif d'encaissement lui-même ou d'un opérateur travaillant sur le dispositif d'encaissement. Il peut également s'agir d'information à destination de l'opérateur travaillant sur le dispositif d'encaissement, par exemple une information sur les bonnes pratiques ergonomiques, sur la préhension de certains articles, sur les temps de pause, ou encore l'envoi d'un message informatif libre. Il est ainsi également possible d'interfacer le dispositif d'encaissement avec des moyens de gestion de stock, des prix des articles, et/ou des moyens d'aide ou d'information à destination d'un opérateur, et ce sans liaison filaire.

Selon un mode de réalisation, la communication entre le module de communication 7 et l'interface de commande sans fil 9 met en oeuvre un protocole de communication sécurisé.

Tel que précédemment mentionné, l'interface de commande sans fil 9 peut comporter un écran tactile 91. L'emploi de cette technologie est particulièrement pertinent dans le cadre de l'invention, dans la mesure où elle permet la mise en oeuvre de menus contextuels permettant le pilotage de multiples fonctions, tout en permettant une navigation rapide et intuitive dans ces menus contextuels.

Ainsi, les figures 6, 7, 8 et 9 illustrent schématiquement et à titre d'exemple uniquement, comment des menus contextuels peuvent être mis en oeuvre dans l'invention.

La figure 6 présente, sous forme d'un diagramme, un exemple de premier niveau d'une interface graphique pouvant être mise en oeuvre dans un mode de réalisation de l'invention. Ainsi, on a représenté schématiquement à la figure 6 l'affichage courant pouvant être employé sur une interface de commande sans fil 9 à écran tactile 91 pouvant être mise en oeuvre dans l'invention. Une première zone Z1 d'affichage est réservée à l'affichage d'informations courantes, typiquement concernant les articles en cours d'encaissement. Une seconde zone Z2 est dédiée à des icônes actives, c'est-à-dire entraînant une action lorsque l'opérateur appuie dessus. Typiquement, une première icone i1 entraîne la mise en marche et l'arrêt général (éventuellement après un message nécessitant une confirmation par l'opérateur) du dispositif d'encaissement. Une icône "menu" i2 permet d'accéder à un menu de niveau inférieur.

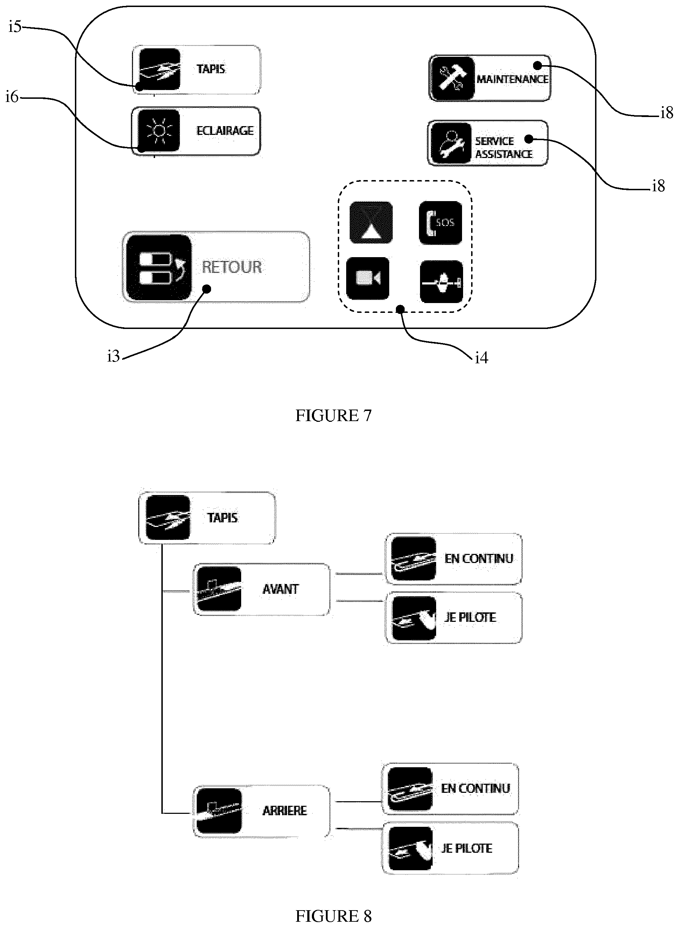

La figure 7 présente, sous forme d'un diagramme, un exemple d'un tel menu de deuxième niveau de l'interface graphique. Dans ce menu, une icône "retour" i3 permet un retour vers le menu de niveau supérieur. Cette icône "retour" i3 est préférentiellement présente dans tous les menus de l'interface à l'exception éventuelle du menu de premier niveau.

Un ensemble d'icône i4 permet l'accès direct à certaines fonctions, par exemple, une fonction d'appel d'urgence, la coupure du faisceau de la cellule de détection des articles, une fonction d'aide ou de tutoriel vidéo à destination de l'opérateur, ou une fonction de décompte du temps d'utilisation du dispositif d'encaissement.

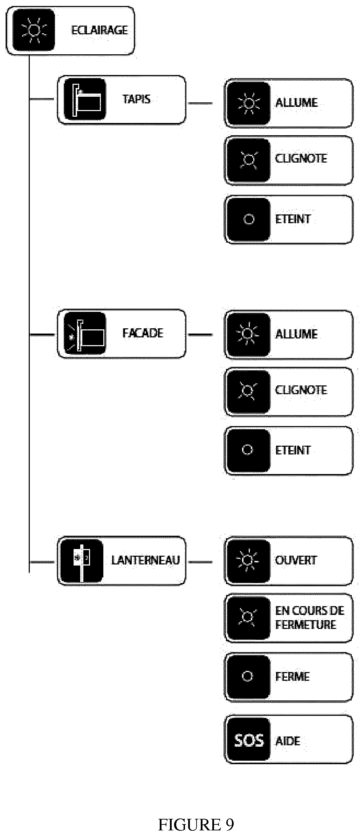

D'autres icônes permettent l'accès à des niveaux inférieurs de menus, dédiés à certaines fonctions du dispositif d'encaissement. Une icône "tapis" i5 permet l'accès à un menu dédié au tapis roulant, menu dont un exemple est détaillé à la figure 8. Une icône "éclairage" i6 permet l'accès à un menu dédié aux éclairages (et plus généralement aux dispositifs lumineux) du dispositif d'encaissement, menu dont un exemple est détaillé à la figure 9.

Une icône "maintenance" i7 permet l'accès à un menu dédié à la maintenance du dispositif d'encaissement, et une icône "service-assistance" i8 permet l'accès à un menu dédié à un service d'assistance à distance.

La figure 8 présente, sous forme de diagramme, un exemple d'arborescence d'un menu contextuel pour la commande d'un tapis. Typiquement, un appui sur l'icône "tapis" i5 ouvre un nouveau menu proposant de choisir le tapis à piloter, par exemple le tapis "avant", c'est à dire un tapis équipant les moyens de réception du dispositif d'encaissement, ou le tapis "arrière", c'est à dire un tapis situé en aval des moyens d'encaissement du dispositif d'encaissement. Pour chaque tapis, des icônes permettent de choisir entre la sélection d'un mode de défilement du tapis en continu, ou un pilotage manuel. Le pilotage manuel d'un tapis peut typiquement être effectué par une action de "glisser" (déplacement du doigt tout en maintenant l'appui) sur l'écran tactile de l'interface. La direction de l'action de "glisser" peut déterminer la direction de défilement du tapis. La vitesse ou la longueur de l'action de "glisser" peut déterminer la vitesse de défilement du tapis. L'action de "glisser" peut typiquement être à réaliser sur une représentation graphique d'un tapis, voire sur une représentation graphique du dispositif d'encaissement complet (permettant ainsi le choix direct du tapis à actionner).

La figure 9 présente, sous forme de diagramme, un exemple d'arborescence de menu contextuel pour la commande d'éclairages. Typiquement, un appui sur l'icône "éclairage" i6 ouvre un nouveau menu proposant de choisir l'éclairage à modifier parmi les différents éclairages du dispositif d'encaissement. Les éclairages peuvent être par exemple un lanterneau, un éclairage de façade, ou encore un éclairage de tapis. Le lanterneau peut permettre d'indiquer si le dispositif d'encaissement est ouvert (pour encaisser les achats des acheteurs), en cours de fermeture, fermé. Le lanterneau peut également servir à appeler un responsable du magasin en cas de problème d'encaissement, et présenter pour cela un état d'éclairage particulier. Un éclairage de façade, positionné sur la façade du dispositif de caisse visible depuis l'intérieur du magasin, peut être typiquement allumé, éteint, ou clignotant. Un éclairage de tapis, éclairant tout ou partie du tapis et des achats qui y sont déposés, peut être allumé, éteint, ou clignotant. Des icônes dédiées peuvent permettre de choisir l'état de chacun des éclairages.

L'invention ainsi développée permet, en offrant une connectivité sans fil, d'offrir une ergonomie améliorée et de nouvelles fonctions aux dispositifs d'encaissement. Le dispositif d'encaissement conforme à l'invention est particulièrement adapté à être mise en oeuvre dans un ensemble comportant une interface de commande tactile.

L'invention a été décrite au moyen d'exemples non limitatifs. Il est bien évident que certaines modifications ou variantes peuvent être envisagées sans sortir du cadre de l'invention défini par les revendications, notamment lorsque des moyens équivalents à certaines caractéristiques techniques mises en oeuvre sont connus dans l'état de la technique.

## Revendications

1. Dispositif d'encaissement d'articles destiné à être installé en sortie d'un magasin, comportant :
- un ensemble mobilier (1) doté de systèmes électriques comportant au moins :
- un dispositif d'éclairage, ou
- des moyens de réception comportant un tapis roulant (31),
- des moyens d'encaissement (2),
- un dispositif de commande desdits systèmes électriques dont l'ensemble mobilier (1) est doté comportant une carte électronique (6),
**caractérisé en ce que** le dispositif de commande comporte un module de communication (7) sans fil configuré pour recevoir des instructions de contrôle desdits systèmes électriques.

2. Dispositif d'encaissement selon la revendication 1, dans lequel le module de communication (7) est relié à un port de communication (67) de la carte électronique (6).

3. Dispositif d'encaissement selon la revendication 1, dans lequel la carte électronique (6) comporte le module de communication (7).

4. Dispositif d'encaissement selon l'une des revendications précédentes, dans lequel le module de communication (7) est configuré pour communiquer par une liaison de type Bluetooth, ou par une liaison de type Wi-Fi.

5. Ensemble comportant un dispositif d'encaissement selon l'une des revendications précédentes et une interface de commande sans fil (9), ladite interface de commande comportant des moyens de communication sans fil adaptés à communiquer avec le module de communication (7) du dispositif d'encaissement.

6. Ensemble selon la revendication 5, dans lequel l'ensemble comporte en outre une interface de commande filaire liée à la carte électronique (6) par une liaison filaire.

7. Ensemble selon la revendication 6, dans lequel l'ensemble comporte en outre des moyens de commutation configurés pour commuter entre une commande des systèmes électriques par l'interface de commande sans fil et une commande des systèmes électriques par l'interface de commande filaire.

8. Ensemble selon la revendication l'une des revendications 5 à 7, dans lequel l'interface de commande sans fil comporte un écran tactile (91).

9. Ensemble selon la revendication 8, dans lequel l'interface de commande sans fil (9) est choisie parmi un Smartphone, une tablette tactile, ou un ordinateur à écran tactile.

10. Ensemble selon l'une des revendications 5 à 9, dans lequel l'ensemble mobilier (1) du dispositif d'encaissement comporte un support conformé (8) pour recevoir l'interface de commande sans fil.

11. Ensemble selon l'une des revendications 5 à 10, dans lequel l'interface de commande sans fil (9) met en oeuvre une interface graphique de pilotage de fonctions du dispositif d'encaissement, l'interface graphique comportant de préférence un menu contextuel.

12. Ensemble selon la revendication 11, dans lequel l'interface graphique est configurée pour le pilotage d'une ou plusieurs fonctions du dispositif d'encaissement parmi : la mise en marche et l'arrêt du dispositif d'encaissement, le pilotage d'un tapis roulant (31), l'arrêt d'urgence, le pilotage de l'allumage et/ou du changement de couleur d'une signalétique lumineuse d'état du dispositif d'encaissement, le pilotage de l'allumage d'un dispositif d'éclairage de tapis roulant.

13. Ensemble selon la revendication 11 ou la revendication 12, dans lequel l'interface graphique est configurée pour le pilotage d'une ou plusieurs fonctions de maintenance du dispositif d'encaissement parmi : un diagnostic de bon fonctionnement du dispositif d'encaissement, l'indication de statistiques d'utilisation du dispositif d'encaissement, l'indication d'un temps de fonctionnement du dispositif d'encaissement, le lancement d'un service de maintenance à distance.

14. Ensemble selon l'une des revendications 11 à 13, dans lequel l'interface graphique est configurée pour le pilotage d'une ou plusieurs fonctions de paramétrage du dispositif d'encaissement parmi : le réglage de la vitesse d'un tapis roulant (31) du dispositif d'encaissement, le paramétrage de fonctions de détection de présence d'articles, le paramétrage d'une signalétique lumineuse, le paramétrage de l'ouverture et fermeture d'un portillon.

15. Ensemble selon l'une des revendications 11 à 14, dans lequel l'interface graphique est configurée pour le pilotage d'une ou plusieurs fonctions d'aide à l'usage, par un opérateur de caisse, du dispositif d'encaissement parmi : la fourniture de conseil d'ergonomie, un appel d'urgence, la gestion des temps de pause, la fourniture de conseil de manutention des articles, le lancement d'un programme d'aide à l'usage du dispositif d'encaissement.

## Patentansprüche

1. Vorrichtung zum Kassieren von Waren, die dazu bestimmt ist, am Ausgang eines Geschäftes angeordnet zu sein, mit:
- einer mit elektrischen Systemen versehenen Möbelanordnung (1), die wenigstens umfasst:
- eine Beleuchtungsvorrichtung oder
- Aufnahmemittel mit einem Transportband (31),
- Kassenmitteln (2),
- einer Vorrichtung zur Bedienung der elektrischen Systeme, mit denen die Möbelanordnung (1) versehen ist, eine elektronische Platine (6) umfassend,
**dadurch gekennzeichnet, dass** die Bedienvorrichtung ein drahtloses Kommunikationsmodul (7) umfasst, das zum Empfang von Befehlen zur Steuerung der elektrischen Systeme ausgebildet ist

2. Kassenvorrichtung nach Anspruch 1,
bei der das Kommunikationsmodul (7) mit einem Kommunikationsanschluss (67) der elektronischen Platine (6) verbunden ist.

3. Kassenvorrichtung nach Anspruch 1,
bei der die elektronische Platine (6) das Kommunikationsmodul (7) umfasst.

4. Kassenvorrichtung nach einem der vorhergehenden Ansprüche,
bei der das Kommunikationsmodul (7) dazu ausgebildet ist, über eine Bluetooth-Verbindung oder eine WiFi-Verbindung zu kommunizieren.

5. Anordnung mit einer Kassenvorrichtung nach einem der vorhergehenden Ansprüche und einer drahtlosen Bedienoberfläche (9), wobei die Bedienoberfläche drahtlose Kommunikationsmittel umfasst, die mit dem Kommunikationsmodul (7) der Kassenvorrichtung zu kommunizieren vermögen.

6. Anordnung nach Anspruch 5,
bei der die Anordnung ferner eine drahtgebundene Bedienoberfläche umfasst, die mit der elektronischen Platine (6) über eine drahtgebundene Verbindung verbunden ist.

7. Anordnung nach Anspruch 6,
bei der die Anordnung ferner Schaltmittel umfasst, die dazu ausgebildet sind, zwischen einer Bedienung der elektrischen Systeme über die drahtlose Bedienoberfläche und einer Bedienung der elektrischen Systeme über die drahtgebundene Bedienoberfläche umzuschalten.

8. Anordnung nach einem der Ansprüche 5 bis 7,
bei der die drahtlose Bedienoberfläche einen Touchscreen (91) umfasst.

9. Anordnung nach Anspruch 8,
bei der die drahtlose Bedienoberfläche (9) aus einem Smartphone, einem Touchscreen-Tablet oder einem PC mit Touchscreen ausgewählt ist.

10. Anordnung nach einem der Ansprüche 5 bis 9,
bei der die Möbelanordnung (1) der Kassenvorrichtung eine Halterung (8) aufweist, die zur Aufnahme der drahtlosen Bedienoberfläche ausgebildet ist.

11. Anordnung nach einem der Ansprüche 5 bis 10,
bei der die drahtlose Bedienoberfläche (9) eine grafische Benutzeroberfläche zur Funktionssteuerung der Kassenvorrichtung benutzt, wobei die grafische Benutzeroberfläche vorzugsweise ein Kontextmenü aufweist.

12. Anordnung nach Anspruch 11,
bei der die grafische Benutzeroberfläche zur Steuerung einer oder mehrerer Funktionen der Kassenvorrichtung ausgebildet ist, darunter: Starten und Stoppen der Kassenvorrichtung, Steuerung eines Transportbandes (31), Notstop, Steuerung zum Einschalten und/oder Ändern der Farbe der Betriebsartleuchtanzeige der Kassenvorrichtung, Steuerung zum Einschalten einer Beleuchtungsvorrichtung des Transportbandes.

13. Anordnung nach Anspruch 11 oder Anspruch 12,
bei der die grafische Benutzeroberfläche zur Steuerung einer oder mehrerer Funktionen zur Wartung der Kassenvorrichtung ausgebildet ist, darunter: Diagnose des ordnungsgemäßen Betriebs der Kassenvorrichtung, statistische Angabe zur Nutzung der Kassenvorrichtung, Angabe zur Betriebszeit der Kassenvorrichtung, Starten eines Fernwartungsdienstes.

14. Anordnung nach einem der Ansprüche 11 bis 13,
bei der die grafische Benutzeroberfläche zur Steuerung einer oder mehrerer Funktionen zum Einstellen der Kassenvorrichtung ausgebildet ist, darunter: Einstellen der Geschwindigkeit eines Transportbandes (31) der Kassenvorrichtung, Einstellen von Funktionen zum Erkennen vorhandener Ware, Einstellen der Leuchtanzeige, Einstellung von Öffnen und Schließen einer Schwenktüre.

15. Anordnung nach einem der Ansprüche 11 bis 14,
bei dem die grafische Benutzeroberfläche zur Steuerung einer oder mehrerer Hilfsfunktionen bei der Benutzung der Kassenvorrichtung durch das Bedienpersonal ausgebildet ist, darunter: Ergonomieratschläge, Notruf, Verwalten von Pausenzeiten, Ratschläge zum Umgang mit den Waren, Starten eines Hilfsprogramms zur Nutzung der Kassenvorrichtung.

## Claims

1. A checkout device for checking out articles, for installation at a shop exit, comprising:
- a furniture assembly (1) provided with electrical systems comprising at least:
- an illuminating device, or
- receiving means comprising a conveyor belt (31),
- checking-out means (2),
- a device for controlling said electrical systems with which the furniture assembly (1) is provided comprising an electronic card (6),
**characterized in that** the controlling device comprises a wireless communication module (7) configured to receive control instructions for said electrical systems.

2. A checkout device according to claim 1, in which the communication module (7) is connected to a communication port (67) of the electronic card (6).

3. A checkout device according to claim 1, in which the electronic card (6) comprises the communication module (7).

4. A checkout device according to one of the preceding claims, in which the communication module (7) is configured to communicate by a Bluetooth type link, or by a WiFi type link.

5. An assembly comprising a checkout device according to one of the preceding claims and a wireless control interface (9), said control interface comprising wireless communication means adapted to communicate with the communication module (7) of the checkout device.

6. An assembly according to claim 5, in which the assembly further comprises a wired control interface linked to the electronic card (6) by a wired link.

7. An assembly according to claim 6, in which the assembly further comprises communication means configured to switch between control of the electrical systems by the wireless control interface and control of the electrical systems by the wired control interface.

8. An assembly according to one of claims 5 to 7, in which the wireless control interface comprises a touch screen (91).

9. An assembly according to claim 8, in which the wireless control interface (9) is chosen from among a Smartphone, a tablet having a touch screen, or a computer having a touch screen.

10. An assembly according to one of claims 5 to 9, in which the furniture assembly (1) of the checkout device comprises a support (8) formed to receive the wireless control interface.

11. An assembly according to one of claims 5 to 10, in which the wireless control interface (9) implements a graphical interface for controlling functions of the checkout device, the graphical interface preferably comprising a context menu.

12. An assembly according to claim 11, in which the graphical interface is configured for the governing of one or more functions of the checkout device from among: the starting up and stopping of the checkout device, the governing of a conveyor belt (31), emergency stopping, the governing of the turning on and/or color change of a light-emitting system for signaling the state of the checkout device, the governing of the turning on of a device for illuminating the conveyor belt.

13. An assembly according to claim 11 or claim 12, in which the graphical interface is configured for the governing of one or more maintenance functions of the checkout device from among: a diagnostic of proper operation of the checkout device, the indication of statistics of use of the checkout device, the indication of an operating time of the checkout device, the launching of a remote maintenance service.

14. An assembly according to one of claims 11 to 13, in which the graphical interface is configured for the governing of one or more parameterization functions of the checkout device from among: the adjustment of the speed of a conveyor belt (31) of the checkout device, the parameterization of functions for detecting presence of articles, the parameterization of a light-emitting system for signaling, the parameterization of the opening and closing of a gate.

15. An assembly according to one of claims 11 to 14, in which the graphical interface is configured for the governing of one or more functions of assisting use, by a checkout operator, of the checkout device from among: the provision of ergonomics advice, an emergency call, the management of break times, the provision of advice for physical handling of the articles, the launching of a program of assisting use of the checkout device.
